(19) **Europäisches Patentamt**
**European Patent Office**
**Office européen des brevets**

(11) **EP 3 605 655 B1**

(12) **EUROPEAN PATENT SPECIFICATION**

(45) Date of publication and mention
of the grant of the patent:
**04.08.2021  Bulletin 2021/31**

(51) Int Cl.:
*H01M 10/0525* (2010.01)      *H01M 50/403* (2021.01)
*H01M 50/411* (2021.01)      *H01M 50/446* (2021.01)
*H01M 50/449* (2021.01)      *H01M 50/46* (2021.01)
*B32B 5/24* (2006.01)      *B32B 27/30* (2006.01)

(21) Application number: **18860746.9**

(22) Date of filing: **27.09.2018**

(86) International application number:
**PCT/JP2018/035945**

(87) International publication number:
**WO 2019/065844 (04.04.2019 Gazette 2019/14)**

(54) **POROUS COMPOSITE FILM, SEPARATOR FOR BATTERY, BATTERY, AND POROUS COMPOSITE FILM PRODUCTION METHOD**

PORÖSER VERBUNDFILM, SEPARATOR FÜR BATTERIE, BATTERIE UND HERSTELLUNGSVERFAHREN FÜR PORÖSEN VERBUNDFILM

FILM COMPOSITE POREUX, SÉPARATEUR DE BATTERIE, BATTERIE ET PROCÉDÉ DE PRODUCTION DE FILM COMPOSITE POREUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **29.09.2017  JP 2017191838**

(43) Date of publication of application:
**05.02.2020  Bulletin 2020/06**

(73) Proprietor: **Toray Industries, Inc.**
**Tokyo 103-8666 (JP)**

(72) Inventors:
• **TAGUCHI Takayuki**
**Tochigi 329-2763 (JP)**
• **MASUDA Shozo**
**Tochigi 329-2763 (JP)**
• **SHIMIZU Yasuki**
**Tochigi 329-2763 (JP)**

(74) Representative: **Hoefer & Partner Patentanwälte mbB**
**Pilgersheimer Straße 20**
**81543 München (DE)**

(56) References cited:
WO-A1-2005/049318      WO-A1-2014/021292
WO-A1-2014/126079      WO-A1-2017/094486
WO-A1-2017/094486      JP-A- 2003 171 495
JP-A- 2013 235 824      JP-A- 2016 038 934
US-A1- 2002 197 413      US-A1- 2015 372 276

**Description**

Technical Field

The present invention relates to a porous composite film, a battery separator, a battery, and a method for producing the porous composite film.

Background Art

A lithium ion secondary battery is capable of high performance and longtime operation of electronic equipment such as a mobile phone or a notebook computer as a high capacity battery that can be charged and discharged repeatedly. Recently, the lithium ion secondary battery is mounted as a driving battery of an environment friendly vehicle such as an electric automobile and a hybrid electric automobile, and further improvement in performance is expected.

In order to improve the performance of such a lithium ion secondary battery, studies have been made to improve battery capacity and improve various battery characteristics such as input/output characteristics, life characteristics, temperature characteristics and storage characteristics, and various materials constituting the battery have also been studied.

As one of them, a separator disposed between a positive electrode and a negative electrode has been studied in various ways, and in particular, studies of an adhesive separator have been developed.

For example, Patent Literature 1 discloses a composite film including a porous substrate and an adhesive porous layer made of a polyvinylidene fluoridebased resin, and describes that it is possible to provide a non-aqueous electrolyte battery separator having excellent adhesiveness to the electrode, ion permeability, and shutdown characteristics by setting curvature of the porous substrate, an average pore size of an adhesive porous layer, and a Gurley value of the porous substrate and the composite film within a specific range.

Patent Literature 2 discloses a method for producing a battery separator in which a modified porous layer containing a fluorine-based resin is laminated on a porous film made of a polyolefin resin. The production method describes that, between a step of coating both surfaces of the porous film simultaneously with a coating liquid in which the fluorine-based resin is dissolved in a solvent and a coagulation step, the porous film after coating is brought into contact with a blur prevention device, and a conveyance speed is set to 30 m/min. It is described that, according to the production method using such a blur prevention device, high productivity can be obtained and coating stripes can be reduced.

Patent Literature 3 discloses a method for producing a non-aqueous secondary battery separator, in which a porous support is allowed to pass between two dies providing a dope containing polyvinylidene fluoride or a copolymer thereof, a coating film is formed on both surfaces of a porous support, and after an air gap step the coated porous support is conveyed to and immersed in a coagulation bath having a coagulating liquid provided below the die to coagulate the coating film. It is described that such a production method is suitable as a method for producing a non-aqueous secondary battery separator having good ion permeability, adhesion to an electrode, and electrolyte retention.

Patent Literature 4 discloses a step of applying a varnish having a specific fluorine resin concentration on a polyolefin microporous film, a step of passing the polyolefin microporous film through a specific low humidity zone, a step of passing the polyolefin microporous film through a specific high humidity zone, a step of immersing the polyolefin microporous film in a coagulation bath and converting the applied layer containing a fluorine-based resin into a modified porous layer, and a step of obtaining a battery separator in which the modified porous layer containing the fluorine-based resin and a particle is laminated on the polyolefin microporous film. It is described that the battery separator obtained by such a production method has excellent shutdown performance and electrode adhesiveness, and is suitable for a high-capacity battery having excellent electrolyte permeability.

Patent Literature 5 teaches a battery separator, which includes a polyolefin microporous membrane having a width of 100 mm or more, and a porous layer laminated on at least one surface of the polyolefin microporous membrane. The polyolefin microporous membrane has a variation range of an F25 value in a width direction of 1 MPa or less, and the F25 value indicates a value obtained by dividing a load value measured at 25% elongation of a specimen with use of a tensile tester by a cross-sectional area of the specimen. The porous layer contains a fluorine-based resin and an inorganic particle.

Patent Literature 6 discloses a battery separator which includes a microporous polyolefin membrane having a thickness of 16 $\mu$m or less, and a modifying porous layer comprising a fluorine resin and an inorganic particle or cross-linked polymer particle, the modifying porous layer being laminated on one side of the microporous polyolefin membrane, wherein the microporous polyolefin membrane has (a) a shutdown temperature of 135° C. or lower, and (b) a rate of air resistance change of 1 x104 sec/100 cc/° C or more. The separator is suitable for high-capacity batteries, and has adhesion to electrodes and is excellent in shutdown properties and electrolyte permeability.

Patent Literature 7 discloses a process for production of a composite porous film wherein a porous support, of which both sides have been coated with a solution (dope) of an organic polymer compound in a water-soluble organic solvent to form a coated film, is passed through an air gap step and conveyed into a coagulating bath comprising water or a mixture of water with the same solvent as the organic solvent, and is then immersed in the coagulating bath so that the coated film on both surfaces of the porous support directly contact the coagulating bath for coagulation, and is then washed and dried. This production process is suitable for production of non-aqueous secondary battery separators, and yields non-aqueous secondary battery separators with good handling properties and at low cost, whereby the ion permeability, adhesion with electrodes and electrolyte solution retention can be strictly controlled.

Citation List

Patent Literature

Patent Literature 1: Japanese Patent No. 5964951

Patent Literature 2: JP 2016-38934 A

Patent Literature 3: JP 2003-171495 A

Patent Literature 4: WO 2014/126079 A1

Patent Literature 5: WO 2017/094486 A1

Patent Literature 6: US 2015/372276 A1

Patent Literature 7: US 2002/197413 A1

Summary of Invention

Technical Problem

However, in a case of using the battery separator described in Patent Literatures 1 to 4, it has been found that even though adhesiveness after injection of the electrolyte becomes high, porous layer strength becomes weak, and cycle characteristics are not in a good state. Further, it has been found that due to the weak porous layer strength, partial falloff and adhesion of dropouts in a production process occur, and defects such as a short circuit are easy to occur. In view of such a problem, an object of the present invention is to provide a porous composite film suitable for a battery separator which have high porous layer strength while maintaining high adhesiveness and can prevent the partial falloff and adhesion of dropouts in the production process, a separator using the same, a battery having excellent cycle characteristics, and a method for producing the porous composite film.

Here, good cycle characteristics mean that charge and discharge of the produced flat wound battery cell are repeated by charge at 1 C until the voltage reaches 4.35 V and discharge at 1 C until the voltage reaches 3.0 V in an atmosphere of 35°C, and the number of cycles until capacity retention reaches 60% is 350 or more. Prevention of the partial falloff and adhesion of dropouts in the production process means that a porous substrate and a porous layer have a stress value (porous layer strength) of 2.0 N or more when a tape is peeled off so that cohesive failure occurs.

Solution to Problem

As a result of earnest studies, the present inventors have found that in a porous composite film including a porous substrate and a porous layer, a cross-sectional void area distribution and a surface pore area distribution of the porous layer are factors that increase the porous layer strength while maintaining high adhesiveness and improve a cycle life of a battery using the porous composite film.

That is, the present invention relates to a porous composite film including a porous substrate and a porous layer laminated on at least one surface of the porous substrate, in which the porous layer contains a fluorine-containing resin and a ceramic, and satisfies the following requirements (i), (ii), (iii) and (iv):

(i) the porous layer contains a polymer containing a vinyliden fluoride unit as the fluorine-containing resin;

(ii) a value of $D_1 50$ of a cross-sectional void area distribution of the porous layer is 0.06 $\mu m^2$ or more and 0.38 $\mu m^2$ or less, and a value of $D_1 90$ of the cross-sectional void area distribution of the porous layer is 0.20 $\mu m^2$ or more and 1.15 $\mu m^2$ or less;

(iii) a value of $D_2 50$ of a surface pore area distribution of the porous layer is 0.0060 $\mu m^2$ or more and 0.0072 $\mu m^2$ or less, and a value of $D_2 90$ of the surface pore area distribution of the porous layer is 0.0195 $\mu m^2$ or more and 0.0220 $\mu m^2$ or less; and

(iv) porosity of the porous layer is 50% or more and 70% or less,

and wherein $D_1 50$, $D_1 90$, $D_2 50$, $D_2 90$ and the porosity are determined as defined in the description.

According to another aspect of the present invention, a battery separator using the above porous composite film is provided.

The present invention also relates to a battery including a positive electrode, a negative electrode, and a battery separator of the present invention disposed between the positive electrode and the negative electrode.

The present invention also relates to a method for producing the porous composite film in the present invention, the method including:

a step of coating at least one surface of a porous substrate with a coating liquid in which a fluorine-containing resin is dissolved in a good solvent, thereby forming a coating layer;

a step of immersing the porous substrate on which the coating layer has been formed in a coagulating liquid containing water, thereby coagulating (phase separation) the fluorine-containing resin to form a porous layer, and obtaining a composite film in which the porous layer has been formed on the porous substrate;

a step of flushing the composite film; and

a step of drying the composite film after flushing,

wherein a temperature of the coagulating liquid is in a range of 10°C to 25°C, and a concentration of the good solvent in the coagulating liquid is 1% by mass or more and less than 20% by mass.

Advantageous Effects of Invention

In the present invention, it is possible to provide a porous composite film suitable for a separator of a battery having excellent cycle characteristics, the porous composite film having a porous layer capable of preventing partial falloff and adhesion of dropouts in the production process while having excellent adhesive force and porous layer strength, and a battery using the porous composite layer. Further, in the present invention, it is possible to provide a method for producing the porous composite film.

Brief Description of Drawings

FIG. 1 illustrates a method for producing a porous composite film in an embodiment of the present invention.

FIG. 2a is a scanning electron microscope image (SEM image) of (A) a cross section of a porous composite film in Example 2.

FIG. 2b is an SEM image of (B) a cross section of a porous composite film in Comparative Example 3.

FIG. 3 are SEM images of surfaces of porous composite films in Examples 1 and 5 and Comparative Example 3.

Description of Embodiments

A porous composite film in an embodiment of the present invention is a porous composite film including a porous substrate and a porous layer laminated on at least one surface of the porous substrate, and the porous layer contains a fluorine-containing resin and a ceramic, and satisfies the following requirements (i), (ii), (iii) and (iv):

(i) the porous layer contains a polymer containing a vinyliden fluoride unit as the fluorine-containing resin;

(ii) a value of $D_1 50$ of a cross-sectional void area distribution of the porous layer is 0.06 $\mu m^2$ or more and 0.38 $\mu m^2$ or less, and a value of $D_1 90$ of the cross-sectional void area distribution of the porous layer is 0.20 $\mu m^2$ or more and 1.15 $\mu m^2$ or less;

(iii) a value of $D_2 50$ of a surface pore area distribution of the porous layer is 0.0060 $\mu m^2$ or more and 0.0072 $\mu m^2$ or less, and a value of $D_2 90$ of the surface pore area distribution of the porous layer is 0.0195 $\mu m^2$ or more and 0.0220 $\mu m^2$ or less; and

(iv) porosity of the porous layer is 50% or more and 70% or less,

and wherein $D_1 50$, $D_1 90$, $D_2 50$, $D_2 90$ and the porosity are determined as defined in the description.

The porous composite film can be suitably used as a separator of a battery, and for example, when used as a separator of a lithium ion battery, a porous layer is preferably provided on both surfaces of the porous substrate.

Both the porous substrate and the porous layer of the porous composite film in the present embodiment have voids suitable for conduction of lithium ions. By holding an electrolyte in the voids, lithium ions can be conducted.

($D_1 50$ and $D_1 90$ of cross-sectional void area distribution of porous layer)

Since the value of $D_1 50$ of a cross-sectional void area distribution of the porous layer is 0.06 $\mu m^2$ or more and 0.38 $\mu m^2$ or less and the value of $D_1 90$ is 0.20 $\mu m^2$ or more and 1.15 $\mu m^2$ or less, a porous composite film including such a porous layer has relatively large pores while having relatively small pores. Therefore, the porous composite film can maintain high porous layer strength while maintaining high adhesiveness by effectively holding the electrolyte.

Since the value of $D_1 50$ of the cross-sectional void area distribution of the porous layer is 0.06 $\mu m^2$ or more and the value of $D_1 90$ is 0.20 $\mu m^2$ or more, a distance between the cross sectional voids can be sufficiently obtained, and when the fluorine-containing resin forming the porous layer is phase-separated, fibril can be present in a bundle. Therefore, the porous layer strength of the porous layer is improved, peeling of the porous layer in the production process is prevented, and adhesive force which is an index of adhesiveness to the electrode is improved, so that the cycle characteristics of the battery using the film can be improved. Therefore, since the value of $D_1 50$ of the cross-sectional void area distribution of the porous layer is 0.06 $\mu m^2$ or more and the value of $D_1 90$ is 0.20 $\mu m^2$ or more, the porous layer has high porous layer strength, is hard to be peeled off, and has good adhesive force, so that a battery having excellent cycle characteristics can be obtained.

When the value of $D_1 50$ of the cross-sectional void area distribution of the porous layer exceeds 0.38 $\mu m^2$ or the value of $D_1 90$ exceeds 1.15 $\mu m^2$, the value of $D_2 50$ of the surface pore area distribution of the porous layer is less than 0.0060 $\mu m^2$, and the outermost layer of the porous layer is densified. In the battery using the porous composite film having such a porous layer whose outermost layer is densified as a separator, resistance during charge and discharge increases and a voltage drop occurs, and then, the cycle characteristics may decrease. Therefore, when the value of $D_1 50$ of the cross-sectional void area distribution of the porous layer is 0.38 $\mu m^2$ or less and the value of $D_1 90$ is 1.15 $\mu m^2$ or less, the porous layer can have a surface dense layer having moderate pores, and as a result, a battery having good cycle characteristics can be obtained.

Here, the "outermost layer of the porous layer" refers to a surface layer region of 25 nm to 150 nm from the surface (a surface opposite to the porous substrate) of the porous layer. When the outermost layer of the porous layer is densified, for example, when the porous substrate coated with the coating liquid serving as the porous layer is immersed in liquid of a coagulation/flushing tank, the surface layer region of 25 nm to 150 nm formed in the outermost surface of the porous layer is densified and a surface dense layer is formed. The surface dense layer corresponds to a layer of a fluorine-containing resin formed when a coating liquid (varnish) with which the porous substrate has been coated is phase-separated at a liquid interface that contacts a non-solvent (coagulating liquid) earliest. When the surface dense layer is too thick, appropriate pores are not formed, and the battery using the porous composite film having the porous layer on which such a surface dense layer is formed has low cycle characteristics. In the present invention, "to" represents being equal to or more a value described before "to" and equal to or less than a value described after "to".

($D_2 50$ and $D_2 90$ of surface pore area distribution of porous layer)

When the value of $D_2 50$ of the surface pore area distribution of the porous layer is 0.0060 $\mu m^2$ or more and 0.0072 $\mu m^2$ or less, and the value of $D_2 90$ is 0.0195 $\mu m^2$ or more and 0.0220 $\mu m^2$ or less, the surface dense layer can have an appropriate densified state and sufficient porous layer strength. By using the porous composite film having such a porous layer as a separator, a battery having excellent cycle characteristics can be obtained.

When the value of $D_2 50$ of the surface pore area distribution of the porous layer is less than 0.0060 $\mu m^2$ or the value of $D_2 90$ is less than 0.0195 $\mu m^2$, the outermost layer of the porous layer becomes excessively dense. In the battery using the porous composite film having such a porous layer whose outermost surface is densified as a separator, resistance during charge and discharge increases and a voltage drop occurs, and then, the cycle characteristics decrease. Therefore, when the value of $D_2 50$ of the surface pore area distribution of the porous layer is 0.0060 $\mu m^2$ or more and the value of $D_2 90$ is 0.0195 $\mu m^2$ or more, the porous layer has a surface dense layer having moderate pores, and as a result, a battery having good cycle characteristics can be obtained.

When the value of $D_2 50$ of the surface pore area distribution of the porous layer is more than 0.0072 $\mu m^2$ or the value of $D_2 90$ is more than 0.0220 $\mu m^2$, the cross-sectional void of the porous layer becomes dense. As a result, since the fibril of the fluorine-containing resin forming the porous layer gathers and cannot be present and the diameter of the fibril decreases, porous layer strength of the porous layer decreases and the porous layer is easily peeled off in the production process. In addition, since adhesive force of the porous composite film decreases, the cycle characteristics of the battery using the film decrease. Therefore, since the value of $D_2 50$ of the surface pore area distribution of the porous layer is 0.0072 $\mu m^2$ or less and the value of $D_2 90$ is 0.0220 $\mu m^2$ or less, the porous layer has high porous layer strength, is hard to be peeled off, and has good adhesive force, so that a battery having excellent cycle characteristics can be obtained.

(Porosity of porous layer)

The porosity of the porous layer is in a range of 50% to 70%, and can be appropriately set depending on a purpose of use of the porous composite film. For example, when the porous composite film in the present embodiment is used for a separator of a lithium ion battery, a sufficient amount of electrolyte cannot be held when the porosity of the porous layer is smaller than 50%, so that conductivity of lithium ions is low and the resistance increases. Conversely, when the porosity of the porous layer is larger than 70%, the porous layer strength decreases. Therefore, the porosity of the porous layer is in the range of 50% to 70%, so that the sufficient amount of the electrolyte can be held while the porous layer strength of the porous layer is sufficiently maintained, and the conductivity of lithium ions can be sufficiently obtained, so that an increase in resistance can be prevented.

(Fluorine-containing resin of porous layer)

Since the porous layer contains a fluorine-containing resin, the porous layer having high adhesive force can be obtained. When the porous composite film in the present embodiment is used for the separator of the lithium ion battery, a cycle life of the battery can be increased when the adhesive force is high.

As the fluorine-containing resin, a homopolymer or copolymer containing at least one polymerization unit selected from the group consisting of vinylidene fluoride, hexafluoropropylene, trifluoroethylene, tetrafluoroethylene, and chlorotrifluoroethylene is preferable, and a polymer including a vinylidene fluoride unit (polyvinylidene fluoride and vinylidene fluoride copolymer) is more preferable. In particular, a vinylidene fluoride copolymer composed of vinylidene fluoride and another polymerization unit is preferable, and a vinylidene fluoride-hexafluoropropylene copolymer and a vinylidene fluoride-chlorotrifluoroethylene copolymer are preferable in view of swelling properties with respect to the electrolyte.

(Ceramic in porous layer)

The porous composite film in the present embodiment may include a ceramic in the porous layer. Examples of the ceramic include titanium dioxide, silica, alumina, silica-alumina composite oxide, zeolite, mica, boehmite, barium sulfate, magnesium oxide, magnesium hydroxide, and zinc oxide.

(Average particle diameter of ceramic)

The average particle diameter of the ceramic can be preferably set in a range of 0.5 $\mu m$ to 2.0 $\mu m$, and more preferably in a range of 0.5 $\mu m$ to 1.5 $\mu m$. However, it is preferable to select the average particle diameter of the ceramic provided that the upper limit of the average particle diameter of the ceramic is a thickness of the porous layer.

(Weight ratio of ceramic in porous layer)

A content of the ceramic is preferably 50% to 90% by weight, and more preferably 60% to 80% by weight based on the total weight of the fluorine-containing resin and the ceramic.

(Average area A1 of cross-sectional void of porous layer)

In the porous composite film in the present embodiment, "an average area of a cross-sectional void" A1 which relates to an average value of a void diameter of the porous layer is preferably 0.054 $\mu m^2$ or more and 0.098 $\mu m^2$ or less, more preferably 0.054 $\mu m^2$ or more and 0.095 $\mu m^2$ or less, and even more preferably 0.054 $\mu m^2$ or more and 0.080 $\mu m^2$ or less. In terms of obtaining sufficient adhesive force and excellent strength of the porous layer, the average area A1 of the cross-sectional void of the porous layer is preferably 0.054 $\mu m^2$ or more. In terms of sufficiently preventing a decrease in the cycle performance of the battery using the porous composite film as a separator, the average area A1 of the cross-sectional void is preferably 0.098 $\mu m^2$ or less.

(Thickness of porous composite film)

The overall thickness of the porous composite film in the present embodiment can be preferably set in a range of 4 $\mu m$ to 30 $\mu m$, and more preferably in a range of 4 $\mu m$ to 24 $\mu m$. By setting the thickness in such a range, it is possible to ensure mechanical strength and insulation properties with a porous layer as thin as possible.

The thickness of the porous layer of the porous composite film in the present embodiment can be preferably set in a range of 1 $\mu m$ to 5 $\mu m$, more preferably in a range of 1 $\mu m$ to 4 $\mu m$, and still more preferably 1 $\mu m$ to 3 $\mu m$. By setting the thickness of the porous layer in such a range, it is possible to obtain a sufficient formation effect of the porous layer and sufficient adhesive force and excellent strength with a minimum thickness required.

(Adhesive force to electrode of porous layer)

The adhesive force of the porous layer of the porous composite film in the present embodiment to the electrode is preferably 5.0 N or more. In a case where the adhesive force to the electrode is less than 5.0 N, when bubbles or the like as a by-product due to a battery reaction are generated, the porous layer is peeled off at a portion where the adhesive force is weak, the portion becomes a defect of the battery, and the cycle characteristics decrease. On the other hand, the upper limit is not particularly specified, but the adhesive force is preferably 10 N or less, and more preferably 8 N or less.

(Porous layer strength of porous layer for cohesive failure)

The porous composite film in the present embodiment has porous layer strength of the porous layer for cohesive failure being preferably 2.0 N or more, and more preferably 2.4 N or more. When the porous layer strength for cohesive failure is less than 2.0 N, the porous layer is peeled off in the process, and dropouts adhere to a roll or the like to reduce productivity. On the other hand, the upper limit is not particularly specified, but the porous layer strength is preferably 10 N or less in view of handleability (blocking or the like) of the porous composite film.

(Porous substrate)

The porous substrate of the porous composite film in the present embodiment is preferably a polyolefin porous film. The polyolefin resin is preferably polyethylene or polypropylene. The polyolefin resin may be a single substance or a mixture of two or more different polyolefin resins, for example, a mixture of polyethylene and polypropylene. The polyolefin may be a homopolymer or a copolymer, for example, the polyethylene may be a homopolymer of ethylene or a copolymer containing units of other $\alpha$-olefins, and the polypropylene may be a homopolymer of propylene or a copolymer containing units of other $\alpha$-olefins. The porous substrate may be a single layer film or a laminated film formed of a plurality of layers of two or more layers.

The polyolefin porous film means a porous film in which a content of the polyolefin resin in the polyolefin porous film is 55% to 100% by mass. When the content of the polyolefin resin is less than 55% by mass, a sufficient shutdown function may not be obtained.

The thickness of the porous substrate is preferably in a range of 3 $\mu m$ to 25 $\mu m$, and more preferably in a range of 3 $\mu m$ to 20 $\mu m$. Porosity of the porous substrate is preferably in a range of 30% to 70%, and more preferably in a range of 35% to 60%. By having such a thickness and porosity, sufficient mechanical strength and insulation properties can be obtained, and sufficient ion conductivity can be obtained.

(Method for producing porous composite film)

The method for producing a porous composite film in the present embodiment includes the following steps (a) to (d), and a temperature of a coagulating liquid is in a range of 10°C to 25°C and a concentration of a good solvent in the coagulating liquid is 1% by mass or more and less than 20% by mass:

(a) a step of coating at least one surface of a porous substrate with a coating liquid in which a fluorine-containing resin is dissolved in a solvent, thereby forming a coating layer;

(b) a step of immersing the porous substrate on which the coating layer has been formed in a coagulating liquid containing water, thereby coagulating the fluorine-containing resin to form a porous layer, and obtaining a composite film in which the porous layer has been formed on the porous substrate;

(c) a step of flushing the composite film; and

(d) a step of drying the composite film after flushing.

Viscosity of the coating liquid in the step (a), the solvent concentration in the coagulating liquid in the step (b), and the temperature of the coagulating liquid are a great factor of determining a structure of the porous layer.

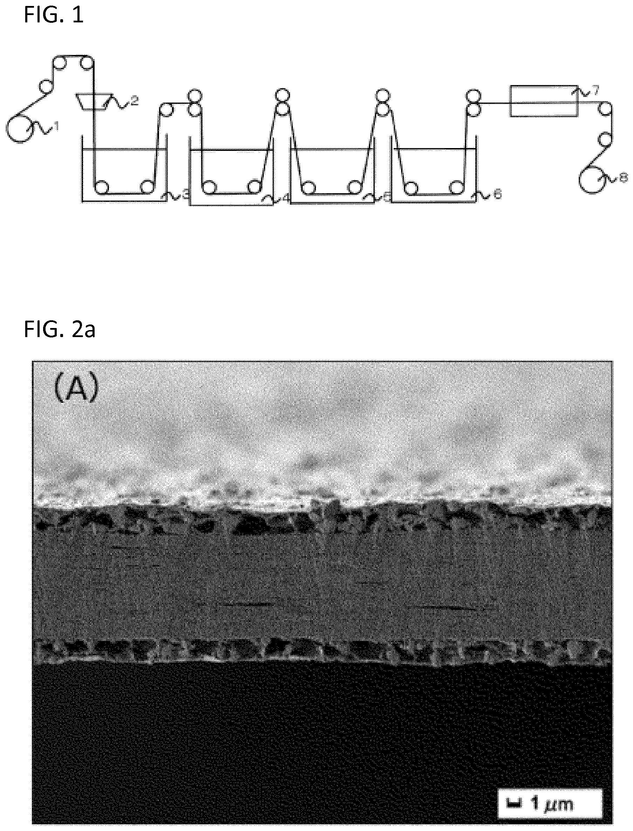

An example of the method for producing a porous composite film in the present embodiment is described below with reference to FIG. 1. In the production method, a coating liquid is applied to both surfaces of the porous substrate (both surfaces of the porous substrate are dip-coated with a coating liquid) by using a head having a gap through which the porous substrate can pass, followed by coagulation, washing, and drying to obtain a porous composite film in which the porous layer is formed on both surfaces of the porous substrate.

First, the porous substrate unwound from an unwinding roll 1 is supplied to a dip head 2 from the above, passes through a gap under the dip head 2, is drawn out downward, and then supplied to the coagulation/flushing tank 3. The dip head 2 can accommodate a coating liquid to enable that both surfaces of the porous substrate passing therethrough are dip-coated. A coating layer is formed on both surfaces of the drawn-out porous substrate, and the thickness of the coating layer can be controlled by size of a gap of the dip head, conveyance speed and the like.

As a solvent of the coating liquid, it is possible to use a good solvent capable of dissolving the fluorine-containing resin and mixing (compatible with any concentration) with a coagulating liquid (phase separation liquid) such as water. When the porous substrate coated with the coating liquid containing the good solvent and the fluorine-containing resin dissolved in the good solvent enters the coagulating liquid in the coagulation/flushing tank, the resin in the coating layer and the good solvent are phase-separated, and the resin is coagulated to form the porous layer.

Examples of the good solvent include N,N-dimethylacetamide (DMAc), N-methyl-2-pyrrolidone (NMP), hexamethylphosphoric triamide (HMPA), N,N-dimethylformamide (DMF), dimethyl sulfoxide (DMSO), and can be selected freely depending on solubility of the resin. As the good solvent, N-methyl-2-pyrrolidone (NMP) is preferable.

The viscosity of the coating liquid can be set in a range of 600 mPa·s to 1000 mPa·s. The viscosity of the coating liquid is measured by a B-type viscometer. A diffusion rate of the non-solvent during phase separation can be controlled by setting the viscosity of the coating liquid in the range of 600 mPa·s to 1000 mPa·s, so that a desired porous layer can be formed.

A concentration of the fluorine-containing resin in the coating liquid is preferably in a range of 2% to 7% by weight, more preferably in a range of 3% to 6% by weight.

The coating thickness can be set to 5 $\mu$m to 25 $\mu$m (one surface). Variation of the coating thickness in a width direction (direction perpendicular to a traveling direction of the film) is preferably ±10% or less.

Although the dip coating method using the dip head is shown in FIG. 1, the coating liquid having a viscosity of 600 mPa·s or more and 1000 mPa·s or less can be applied to one surface of the porous substrate so that the coating thickness is 5 $\mu$m or more and 25 $\mu$m or less, and various coating methods can be adopted as long as coating can be performed so that thickness variation in the width direction is ±10%. Examples thereof include a wet coating method such as common dip coating, casting, spin coating, bar coating, spraying, blade coating, slit die coating, gravure coating, reverse coating, lip directing, comma coating, screen printing, mold application, printing transfer, and ink jetting. In particular, when the coating is performed continuously and at a coating speed of, for example, 30 m/min or more, the lip directing method, the comma coating method, or the dip coating method, as scraping methods which are suitable for high viscosity, thin film, and high-speed coating, are preferable. In addition, a dip coating method is more preferable in terms of being able to form the porous layer on both surfaces at the same time. By adopting the dip coating method, the coating can be performed at a speed of 80 m/min or more.

When the coating is continuously performed, the conveyance speed can be set in a range of, for example, 5 m/min to 100 m/min, and can be appropriately set depending on the coating method in terms of productivity and uniformity of the thickness of the coating layer.

The coagulating liquid is preferably water or an aqueous solution containing water as a main component, and the concentration of the good solvent in the coagulating liquid is preferably less than 20% by mass (that is, the content of water is 80% by mass or more), and more preferably 16% by mass or less (that is, the content of water exceeds 84% by mass). For example, the concentration of the good solvent in the coagulating liquid is preferably maintained in a range of 0.1% by mass or more and less than 20% by mass, and still more preferably in a range of 0.1% by mass or more and 16% by mass or less.

The porous substrate on which the coating layer is formed by the dip head is immersed in the coagulating liquid in the coagulation/flushing tank.

The temperature of the coagulating liquid is preferably 25°C or less, more preferably 24°C or less. When the temperature is set to such a range, the coating layer can be phase-separated at a moderate phase separation rate in the coagulating liquid to form a desired porous layer, and temperature control is easily performed. On the other hand, the temperature of the coagulating liquid may be in a range where the coagulating liquid can be kept liquid (temperature higher than a coagulation point), and in terms of the lower limit, the temperature is necessary to be 10°C or higher, preferably 15°C or higher, and more preferably 17°C or higher in terms of temperature control or phase separation speed.

Immersion time in the coagulating liquid in the coagulation/flushing tank is preferably 3 seconds or more, and more preferably 5 seconds or more. The upper limit of the immersion time is not particularly limited, but sufficient coagulation can be achieved by immersion for 10 seconds.

The porous composite film in which the porous layer is formed on the porous substrate is obtained at a stage of being unwound from the coagulating liquid in the coagulation/flushing tank 3. The porous composite film is subsequently supplied into water of a primary flushing tank 4, sequentially introduced into water of a secondary flushing tank 5 and into water of a tertiary flushing tank 6, and continuously washed. Although the number of the flushing tanks is three in FIG. 1, the number of the flushing tanks may be increased or decreased depending on a washing effect in the flushing tank. Washing water in each tank may be continuously supplied, or the recovered washing water may be purified and recycled.

Next, the porous composite film unwound from the last tertiary flushing tank 6 is introduced into a drying furnace 7, the adhered washing liquid is removed, and the dried porous composite film is wound by a winding roll 8.

(Measurement method)

(1) $D_1 50$ and $D_1 90$ of cross-sectional void area distribution of porous layer

$D_1 50$ and $D_1 90$ of a cross-sectional void area distribution of the porous layer are determined as follows.

An SEM image of a substrate cross section which has been cross-sectioned by ion milling in a direction perpendicular to the substrate surface is observed randomly at an acceleration voltage of 2.0 kV and a magnification of 5,000 times in a direction perpendicular to the substrate cross section, the obtained 50 pieces of cross-sectional SEM images are cut in parallel to the surface direction of the substrate at a point where the thickness direction of the substrate is divided internally into 1:1 respectively, a gray value is acquired for the image, and for an image having a larger average value of the gray value, first, image data is read in by an image analysis software HALCON (Ver. 13.0, manufactured by MVtec), then, after performing contour emphasis (processing in an order of a differential filter (emphasize) and an edge emphasis filter (shock_filter)), binarization is performed. Note that the "emphasize" of the differential filter used for contour emphasis and the "shock filter" of the edge emphasis filter are image processing filters included in the HALCON. Regarding the binarization, the lower limit of a threshold with respect to the gray value is set to 64 and the upper limit is set to 255, a part of 64 or more is a part where there is a fluorine-containing resin (including a filler such as ceramic when there is a filler) such as PVdF (polyvinylidene fluoride), further, a gray value of a region where the resin component and the filler are present is replaced with 255, and a gray value of other regions (cross section void portion) is replaced with 0, and consecutive pixels having a gray value of 0 are connected to each other, areas of 100 or more cross-sectional void portions are extracted from one image. The areas of the extracted cross-sectional void portions are taken as cross-sectional void areas, and among the cross-sectional void areas, $D_1 50$ and $D_1 90$ in a distribution of area values of cross-sectional void areas satisfying the relationship (1) are calculated. Here, $D_1 50$ is an area where a cumulative area is 50% with respect to a total area in which the cross-sectional void areas are rearranged in an ascending order and all the areas are added together, and $D_1 90$ refers to an area in which the cumulative area is 90%.

[Math. 1]

$$X < X_{max} \times 0.9 \qquad (1)$$

In the relationship, X represents each cross-sectional void area, $X_{max}$ represents a maximum value of each cross-sectional void area.

(2) $D_2 50$ and $D_2 90$ of surface pore area distribution of porous layer

$D_2 90$ and $D_2 50$ of a surface pore area distribution of the porous layer are determined as follows.

For 50 pieces of surface SEM images obtained by observing the SEM image randomly at an acceleration voltage of 2.0 kV and a magnification of 10,000 times in a direction perpendicular to the substrate surface, first, image data is read in by an image analysis software HALCON (Ver. 13.0, manufactured by MVtec), then, after performing contour emphasis (processing in an order of a differential filter (emphasize) and an edge emphasis filter (shock_filter)), binarization is performed. Regarding the binarization, the lower limit of a threshold with respect to the gray value is set to 10 and the upper limit is set to 255, a part of 10 or more is a part where there is a fluorine-containing resin (including a filler such as ceramic when there is a filler) such as PVdF, further, a gray value of a region where the resin component and the filler are present is replaced with 255, and a gray value of other regions (surface pore portion) is replaced with 0, and consecutive pixels having a gray value of 0 are connected to each other, areas of 100 or more surface pore portions are extracted from one image. The areas of the extracted surface pore portions are taken as surface pore areas, and among the surface pore areas, $D_290$ and $D_250$ in a distribution of area values of surface pore areas satisfying the relationship (2) are calculated. Here, $D_290$ is an area where a cumulative area is 90% with respect to a total area in which the surface pore areas are rearranged in an ascending order and all the areas are added together, and $D_250$ refers to an area in which the cumulative area is 50%.

[Math. 2]

$$Y < Y_{max} \times 0.9 \qquad (2)$$

In the relationship, Y represents each surface pore area, and $Y_{max}$ represents a maximum value of each surface pore area.

(3) Porosity V of porous layer

The porosity V of the porous layer is calculated using the following formula.

[Math. 3]

$$V = 100 \times \left\{ 1 - \left( \frac{W_A}{D} \right) / t \right\} \qquad (3)$$

In the formula, $W_A$ is a basis weight of the porous layer, D is a true density of the porous layer, and t is a thickness of the porous layer.

The basis weight $W_A$ of the porous layer is measured as follows by using the following formula.

$$W_A = \text{basis weight of coated film } (W_{A1}) - \text{basis weight of substrate } (W_{A2})$$

The basis weight $W_{A1}$ of the coated film and the basis weight $W_{A2}$ of the substrate are calculated using the following formula after preparing 5 cm square samples.

$$W_{A1} = \text{"weight of coated film 5 cm square sample"}/0.0025$$

$$W_{A2} = \text{"weight of substrate 5 cm square sample"}/0.0025$$

The true density D of the porous layer is calculated using the following formula.

$$D = \text{density of material A} \times \text{composition ratio (mass ratio) of A} + \text{density of material B} \times \text{composition ratio (mass ratio) of B} + \cdots$$

The thickness t of the porous layer is measured as follows by using the following formula.

$$t = \text{thickness of coated film } (t_1) - \text{thickness of substrate } (t_2)$$

The thicknesses (t₁, t₂) are measured using a contact-type film thickness meter ("Lightmatic" (registered trademark) series 318, manufactured by Mitutoyo Corporation). In the measurement, 20 points are measured at a load of 0.01 N using a carbide spherical surface measuring element φ 9.5 mm, and an average value of the obtained measurement values is used as a thickness.

(4) Average area A1 of cross-sectional void of porous layer

The average area A1 of the cross-sectional voids of the porous layer is measured as follows.

An SEM image of a cross section which has been cross-sectioned by ion milling in a direction perpendicular to the substrate surface is observed randomly at an acceleration voltage of 2.0 kV and a magnification of 5,000 times, the 50 pieces of cross-sectional SEM images are cut in parallel to the surface direction of the substrate at a point where the thickness direction of the substrate is divided internally into 1:1 respectively, a gray value is acquired for the image, and for an image having a larger average value of the gray value, first, image data is read in by an image analysis software HALCON (Ver. 13.0, manufactured by MVtec), then, after performing contour emphasis (processing in an order of a differential filter (emphasize) and an edge emphasis filter (shock_filter)), binarization is performed. Regarding the binarization, the lower limit of a threshold with respect to the gray value is set to 64 and the upper limit is set to 255, a part of less than 64 is a void, a part of 64 or more is a part where there is PVdF (including a filler when there is a filler), further, a gray value of a region where the resin component and the filler are present is replaced with 255, and a gray value of other regions (void portion) is replaced with 0, and consecutive pixels having a gray value of 0 are connected to each other, areas of 100 or more cross-sectional void portions are extracted from one image. The areas of the extracted cross-sectional void portions are taken as cross-sectional void areas, and among the cross-sectional void areas, an average area A1 of the cross-sectional voids regarding the cross-sectional void areas satisfying the relationship (1) is calculated by the formula (4).
[Math. 4]

$$A1 = \frac{1}{N}\sum_{i=1}^{N} Xi \qquad (4)$$

(Lithium ion secondary battery)

The porous composite film in the present embodiment can be used as a battery separator, and can be suitably used as a separator of the lithium ion secondary battery. By using the porous composite film in the present embodiment as the separator, the lithium ion secondary battery having excellent cycle characteristics can be provided.
The battery in the present embodiment includes a positive electrode, a negative electrode, and the battery separator in the present embodiment that is disposed between the positive electrode and the negative electrode.
Examples of the lithium ion secondary battery to which the porous composite film in the present embodiment is applied include a lithium ion secondary battery having a structure in which an electrolyte containing electrolytes is impregnated in a battery element in which the negative electrode and the positive electrode are disposed to face each other via the separator, and these are enclosed in an exterior material.
Examples of the negative electrode include those in which a negative electrode mixture including a negative electrode active material, a conductive assistant, and a binder is formed on a current collector. As the negative electrode active material, a material capable of doping and dedoping lithium ions is used. Specific examples thereof include a carbon material such as graphite and carbon, a silicon oxide, a silicon alloy, a tin alloy, a lithium metal, and a lithium alloy. As the conductive assistant, a carbon material such as acetylene black and Ketjen black is used. As the binder, styrene-butadiene rubber, polyvinylidene fluoride, polyimide, or the like is used. As the current collector, a copper foil, a stainless steel foil, a nickel foil, or the like is used.
Examples of the positive electrode include those in which a positive electrode mixture including a positive electrode active material, a binder, and a conductive assistant as necessary is formed on a current collector. Examples of the positive electrode active material include a lithium composite oxide containing at least one transition metal such as Mn, Fe, Co, and Ni. Specific examples thereof include lithium nickelate, lithium cobaltate, and lithium manganate. As the conductive assistant, a carbon material such as acetylene black and Ketjen black is used. As the binder, polyvinylidene fluoride or the like is used. As the current collector, an aluminum foil, a stainless steel foil, or the like is used.
As the electrolyte, for example, a solution obtained by dissolving a lithium salt in a non-aqueous solvent may be used. Examples of the lithium salt include $LiPF_6$, $LiBF_4$, $LiClO_4$, and $LiN(SO_2CF_3)_2$. Examples of the non-aqueous solvent include propylene carbonate, ethylene carbonate, dimethyl carbonate, diethyl carbonate, ethyl methyl carbonate, and γ-butyrolactone, and various additives such as vinylene carbonate and a mixture of two or more of these additives are usually used. An ionic liquid (room temperature molten salt) such as an imidazolium cation liquid may also be used.

Examples of the exterior material include a metal can or an aluminum laminate pack. Examples of a shape of the battery include a coin type, a cylindrical type, a square type, and a laminate type.

Examples

(Measurement method)

Regarding a porous composite film in each Example and each Comparative Example, $D_1 50$ and $D_1 90$ of a cross-sectional void area distribution of a porous layer were measured according to the above (1), $D_2 90$ and $D_2 50$ of a surface pore area distribution of the porous layer were measured according to the above (2), porosity V of the porous layer was measured according to the above (3), and an average area A1 of a cross-sectional void of the porous layer were measured according to the above (4). Thickness, adhesive force, and porous layer strength were measured in accordance with the following.

(Thickness)

The thickness was measured using a contact-type film thickness meter ("Lightmatic" (registered trademark) series 318, manufactured by Mitutoyo Corporation). In the measurement, 20 points were measured at a load of 0.01 N using a carbide spherical surface measuring element $\varphi$ 9.5 mm, and an average value of the obtained measurement values was used as the thickness.

(Porous layer strength)

The porous layer strength was measured by the method based on 180° peel of JIS C5016-1994. A double-sided tape cut to about 20 mm x 100 mm (transparent film double-sided tape SFR-2020, manufactured by Seiwa Industry Co., Ltd.) was stuck to each porous composite film, the film was pressure-bonded to a metal plate, about 80 mm of Cellotape (registered trademark) (plant system, No. 405) cut to about 15 mm x 90 mm was stuck to a sample surface center, and the metal plate and Cellotape (registered trademark) were set on an autograph so as to peel off Cellotape (registered trademark) in a 180° direction so as to cause cohesive failure between the porous substrate and the porous layer, pulled at 100.0 mm/min, and stress at the time of tape peeling was measured.

(Example 1)

A porous composite film was produced based on the production process shown in FIG. 1. Specifically, first, a polyolefin porous film (thickness: 7 $\mu$m) unwound from a roll was passed through a gap of a dip head from the above to the below of the dip head at a conveyance speed of 7 m/min, and a coating liquid was applied to both surfaces of the polyolefin porous film, followed by immersion in a coagulating liquid to form a coating layer on the polyolefin porous film. A size (length in a thickness direction) of the gap of the dip head was 45 $\mu$m. PVdF (polyvinylidene fluoride) was used as a resin of the coating liquid, NMP (N-methyl-2-pyrrolidone) was used as a good solvent that dissolves the resin, a mass ratio of PVdF to NMP was PVdF : NMP = 1:22, and coating thickness (one surface) was 12.0 $\mu$m (thickness of porous layer (one surface) was 1.5 $\mu$m). Alumina was used as a ceramic of the coating liquid, and a mass ratio of PVdF to alumina was PVdF : alumina = 1:1.4.

In the coagulating liquid in a coagulation/flushing tank, water was used as a phase separation liquid, a concentration of NMP in the coagulating liquid was maintained at 0.1% by mass, and temperature of the coagulating liquid was set to 11°C.

At a stage of being drawn out from the coagulating liquid, the porous composite film including the polyolefin porous film and a porous layer formed on the polyolefin porous film was obtained, and the porous composite film was introduced into water of a primary flushing tank, a secondary flushing tank, and a tertiary flushing tank in order, and washed successively.

Next, the porous composite film unwound from the last tertiary flushing tank was introduced into a drying furnace, the adhered washing liquid was removed, and the dried porous composite film was wound.

Production conditions and measurement results of the obtained porous composite film are shown in Table 1.

(Examples 2 to 15, Reference Examples 16 to 18 and Comparative Examples 1 to 3)

A porous composite film was produced in the same manner as in Example 1 except that a size (coating gap) of a gap of a dip head, a mass ratio of PVdF to alumina of a coating liquid, viscosity of a coating material, a temperature of a coagulating liquid, and a NMP concentration in the coagulating liquid were adjusted as shown in Table 1 so that a basis weight of PVdF of a porous layer was equal. Measurement results are shown in Table 1.

(Comparative Example 4)

A coating liquid using an acrylic resin instead of PVdF, alumina as ceramics, and water as a good solvent was applied to one surface of the same kind of the porous substrate as in Example 1 by a gravure method (coating thickness (one surface): 12.0 $\mu$m) and dried to form a porous layer on one surface. Measurement results are shown in Table 1.

(Production of lithium ion secondary battery and evaluation of cycle characteristics)

(Production of electrolyte)

The electrolyte was prepared by adding LiPF$_6$ (lithium hexafluorophosphate) 1.15 M and 0.5% by weight of vinylene carbonate (VC) to a solvent obtained by the following mixture, ethylene carbonate (EC) : methyl ethyl carbonate (MEC) : diethyl carbonate (DEC) = 3:5:2 (volume ratio).

(Production of positive electrode)

Acetylene black graphite and polyvinylidene fluoride were added to lithium cobaltate (LiCoO$_2$) and dispersed in N-methyl-2-pyrrolidone to form a slurry. A positive electrode layer was formed by uniformly applying the slurry on both surfaces of a positive electrode current collector aluminum foil having a thickness of 20 $\mu$m. Thereafter, a belt-shaped positive electrode in which density of the positive electrode layer except the current collector was 3.6 g/cm$^3$ was produced by compression molding using a roll press machine.

(Production of negative electrode)

An aqueous solution containing 1.5 parts by mass of carboxymethyl cellulose was added to 96.5 parts by mass of artificial graphite and they were mixed, and 2 parts by mass of styrene-butadiene latex were added as a solid content to form a negative electrode mixture containing slurry. A negative electrode layer was formed by uniformly applying the negative electrode mixture containing slurry on both surfaces of a negative electrode current collector made of a copper foil having a thickness of 8 $\mu$m. Thereafter, a belt-shaped negative electrode in which density of the negative electrode layer except the current collector was1.5 g/cm$^3$ was produced by compression-molding using a roll press machine.

(Production of test wound body)

The negative electrode (161 mm in mechanical direction x 30 mm in width direction) produced above and the porous composite film (160 mm in mechanical direction x 34 mm in width direction) in the Examples or Comparative Examples were stacked. The porous composition film and the negative electrode were wound around a metal plate (300 mm in length, 25 mm in width, 1 mm in thickness) serving as a winding core so that the porous composition film was on an inner side. The metal plate was then pulled out to obtain a test wound body. The test wound body had a length of about 34 mm and a width of about 28 mm.

(Adhesive force)

Two laminated films made of polypropylene (70 mm in length, 65 mm in width, 0.07 mm in thickness) were stacked, and the test wound body was put into a bag-shaped laminated film in which three sides of four sides were welded. 500 $\mu$L of an electrolytic solution, in which LiPF$_6$ was dissolved at a proportion of 1 mol/L to a solvent in which ethylene carbonate and ethyl methyl carbonate were mixed at a volume ratio of 3:7, was injected from an opening of the laminated film in a glove box so as to impregnate the test wound body, and one side of the opening was sealed by a vacuum sealer.

Next, the test wound body sealed in the laminated film was interposed by two pieces of gaskets (1 mm in thickness, 5 cm x 5 cm) and pressurized at 98°C and 0.6 MPa for 2 minutes in a precision heating and pressurizing device (CYPT-10, manufactured by SHINTOKOGIO Ltd.). After being pressurized and sealed in the laminated film, the test wound body had the bending strength in a wet state measured using a universal testing machine (AGS-J, manufactured by Shimadzu Corporation).

Two aluminum L-shaped angles (1 mm in thickness, 10 mm x 10 mm, and 5 cm in length) were arranged in parallel such that 90° portions thereof were upward. End portions of the angles were aligned and fixed with the 90° portions as fulcrums, so that a distance between the 90° portions was 15 mm. A midpoint of a side (about 28 mm) of the test wound body in the width direction was aligned with a 7.5 mm point which is a middle point of a distance between fulcrums of the two aluminum L-shaped angles, and the test wound body did not protrude from a side of the L-shaped angles in the length direction.

Next, a side (substantially 34 mm) of the test wound body in a length direction was parallel to and did not protrude from a side of an aluminum L-shaped angle as an indenter (1 mm in thickness, 10 mm x 10 mm, 4 cm in length). The middle point of the side of the test wound body in the width direction was aligned with a 90° portion of the aluminum L-shaped angle. The aluminum L-shaped angle was fixed to a load cell (load cell capacity: 50 N) of a universal testing machine such that the 90° portion is downward. An average value of maximum test forces obtained by measuring three text wound bodies at a load speed of 0.5 mm/min was taken as the adhesive force.

(Production of battery)

The positive electrode, the porous composite film in the above Examples or Comparative Examples, and the negative electrode were stacked, and then, a flat wound electrode body (height 2.2 mm x width 32 mm x depth 32 mm) was produced. A tab with a sealant was welded to each electrode of the flat wound electrode body to form a positive electrode lead and a negative electrode lead.

Next, the flat wound electrode body part was sandwiched by an aluminum laminated film, sealed by leaving some opening portions, dried in a vacuum oven at 80°C over 6 hours. After drying, 0.75 ml of the electrolyte was quickly injected, followed by sealing with a vacuum sealer, and press molding was performed at 90°C and 0.6 MPa for 2 minutes.

Subsequently, the obtained battery was charged and discharged. As the charge and discharge conditions, constant current charge was performed at a current value of 300 mA until a battery voltage reached 4.35 V, and then constant voltage charge was performed at a battery voltage of 4.35 V until a current value reached 15 mA. After a pause of 10 minutes, the constant current discharge was performed at a current value of 300 mA until a battery voltage reached 3.0 V, and was paused for 10 minutes. Three cycles of the above charge and discharge were performed to produce a secondary battery for test (flat wound battery cell) having a battery capacity of 300 mAh.

(Cycle evaluation)

Charge and discharge of the flat wound battery cell produced above were repeated by charge at 300 mA until the voltage reached 4.35 V and discharge at 300 mA until the voltage reached 3.0 V in an atmosphere of 35°C using a charge and discharge measurement device, and the number of cycles until capacity retention reaches 60% was determined. It is shown that when the number of cycles is large, the cycle characteristics are good. Charge/discharge conditions at this time were as follows.

Charge conditions: 1C, CC-CV charge, 4.35V, 0.05 C Cut off
Pause: 10 minutes
Discharge conditions: 1C, CC discharge, 3V Cut off
Pause: 10 minutes.

Table 1

| | Resin | Coating method | NMP concentration [% by mass] | PVdF:alumina mass ratio | Coating gap [μm] | Temperature [C°] | Viscosity of coating material [mPa·s] | Porous layer | | | |
|---|---|---|---|---|---|---|---|---|---|---|---|
| | | | | | | | | Coating thickness (one surface) [μm] | Thickness (total thickness) [μm] | Basis weight [g/m²] | Porosity [%] |
| Example 1 | PVdF | dip | 0.2 | 1 : 1.4 | 45 | 24 | 740 | 10.6 | 2.6 | 2.3 | 66 |
| Example 2 | PVdF | dip | 0.1 | 1 : 2.4 | 45 | 11 | 800 | 10.6 | 3.3 | 3.2 | 67 |
| Example 3 | PVdF | dip | 0.2 | 1 : 3.8 | 46 | 16 | 860 | 10.9 | 4.4 | 4.6 | 67 |
| Example 4 | PVdF | dip | 1.3 | 1 : 1.6 | 45 | 19 | 800 | 10.7 | 2.8 | 2.5 | 67 |
| Example 5 | PVdF | dip | 1.2 | 1 : 2.5 | 44 | 17 | 900 | 10.3 | 3.3 | 3.2 | 67 |
| Example 6 | PVdF | dip | 1.2 | 1 : 4.2 | 46 | 20 | 890 | 10.8 | 4.5 | 4.9 | 66 |
| Example 7 | PVdF | dip | 6.0 | 1 : 1.3 | 47 | 15 | 790 | 11.1 | 2.6 | 2.3 | 66 |
| Example 8 | PVdF | dip | 5.8 | 1 : 2.4 | 45 | 24 | 810 | 10.6 | 3.3 | 3.2 | 66 |
| Example 9 | PVdF | dip | 5.9 | 1 : 3.9 | 46 | 18 | 950 | 10.9 | 4.3 | 4.7 | 66 |
| Example 10 | PVdF | dip | 11.0 | 1 : 1.5 | 45 | 12 | 690 | 10.6 | 2.6 | 2.4 | 65 |
| Example 11 | PVdF | dip | 11.1 | 1 : 2.2 | 47 | 22 | 770 | 11.0 | 3.2 | 3.2 | 66 |
| Example 12 | PVdF | dip | 11.2 | 1 : 4.1 | 46 | 19 | 880 | 10.7 | 4.4 | 4.8 | 66 |
| Example 13 | PVdF | dip | 15.9 | 1 : 1.7 | 45 | 13 | 710 | 10.7 | 2.6 | 2.6 | 64 |
| Example 14 | PVdF | dip | 16.0 | 1 : 2.3 | 46 | 18 | 820 | 10.8 | 3.0 | 3.2 | 64 |
| Example 15 | PVdF | dip | 16.0 | 1 : 4.4 | 47 | 17 | 920 | 11.0 | 4.6 | 5.2 | 65 |
| Ref. Example | PVdF | dip | 21.4 | 1 : 1.2 | 45 | 26 | 640 | 10.5 | 2.2 | 2.1 | 62 |
| Ref. Example | PVdF | dip | 21.4 | 1 : 2.2 | 46 | 30 | 720 | 10.8 | 2.9 | 3.1 | 62 |
| Ref. Example | PVdF | dip | 21.3 | 1 : 4.5 | 47 | 28 | 790 | 11.0 | 4.4 | 5.3 | 63 |
| Comparative Example 1 | PVdF | dip | 0 | 1 : 3.9 | 47 | 50 | 890 | 11.1 | 5.0 | 4.8 | 70 |
| Comparative Example 2 | PVdF | dip | 21.9 | 1 : 3.7 | 47 | 5 | 830 | 11.0 | 4.0 | 5.0 | 61 |

| | Resin | Coating method | NMP concentration [% by mass] | PVdF:alumina mass ratio | Coating gap [μm] | Temperature [C°] | Viscosity of coating material [mPa·s] | Porous layer | | | |
|---|---|---|---|---|---|---|---|---|---|---|---|
| | | | | | | | | Coating thickness (one surface) [μm] | Thickness (total thickness) [μm] | Basis weight [g/m²] | Porosity [%] |
| Comparative Example 3 | PVdF | dip | 24.8 | 1 : 3.8 | 46 | 25 | 750 | 10.9 | 3.8 | 4.6 | 61 |
| Comparative Example 4 | acrylic | gravure | - | - | - | - | - | 12.0 | 3.0 | 3.0 | 55 |

| | $D_1 50$ of cross-sectional void area distribution [μm²] | $D_1 90$ of cross-sectional void area distribution [μm²] | Average area A1 of cross-sectional void [μm²] | $D_2 50$ of surface pore area distribution [μm²] | $D_2 90$ of surface pore area distribution [μm²] | Adhesive force [N] | Porous layer strength [N] | Cycle characteristics [cycle number until capacity retention reaches 60%] |
|---|---|---|---|---|---|---|---|---|
| Example 1 | 0.3700 | 1.1360 | 0.0969 | 0.00610 | 0.0199 | 6.06 | 2.61 | 436 |
| Example 2 | 0.3704 | 1.1365 | 0.0976 | 0.00610 | 0.0198 | 6.08 | 2.63 | 435 |
| Example 3 | 0.3702 | 1.1299 | 0.0967 | 0.00611 | 0.0198 | 6.08 | 2.62 | 444 |
| Example 4 | 0.3380 | 1.1149 | 0.0942 | 0.00612 | 0.0198 | 6.00 | 2.61 | 439 |
| Example 5 | 0.3378 | 1.1141 | 0.0938 | 0.00610 | 0.0198 | 6.07 | 2.60 | 437 |
| Example 6 | 0.3382 | 1.1470 | 0.0944 | 0.00611 | 0.0199 | 6.05 | 2.59 | 433 |
| Example 7 | 0.2290 | 0.7692 | 0.0786 | 0.00615 | 0.0199 | 5.92 | 2.64 | 427 |
| Example 8 | 0.2290 | 0.7693 | 0.0792 | 0.00615 | 0.0199 | 5.84 | 2.62 | 415 |
| Example 9 | 0.2300 | 0.7668 | 0.0796 | 0.00617 | 0.0199 | 5.90 | 2.63 | 419 |
| Example 10 | 0.1457 | 0.4892 | 0.0660 | 0.00621 | 0.0201 | 5.64 | 2.58 | 389 |
| Example 11 | 0.1452 | 0.4982 | 0.0649 | 0.00620 | 0.0200 | 5.61 | 2.61 | 396 |
| Example 12 | 0.1455 | 0.4999 | 0.0657 | 0.00619 | 0.0202 | 5.54 | 2.59 | 394 |
| Example 13 | 0.0801 | 0.3666 | 0.0550 | 0.00634 | 0.0202 | 5.42 | 2.44 | 372 |
| Example 14 | 0.0800 | 0.3600 | 0.0543 | 0.00620 | 0.0205 | 5.31 | 2.52 | 364 |
| Example 15 | 0.0789 | 0.3622 | 0.0543 | 0.00622 | 0.0206 | 5.36 | 2.52 | 370 |

(continued)

| | D$_1$50 of cross-sectional void area distribution [μm²] | D$_1$90 of cross-sectional void area distribution [μm²] | Average area A1 of cross-sectional void [μm²] | D$_2$50 of surface pore area distribution [μm²] | D$_2$90 of surface pore area distribution [μm²] | Adhesive force [N] | Porous layer strength [N] | Cycle characteristics [cycle number until capacity retention reaches 60%] |
|---|---|---|---|---|---|---|---|---|
| Ref. Example 16 | 0.0620 | 0.2172 | 0.0446 | 0.00698 | 0.0219 | 5.16 | 2.43 | 352 |
| Ref. Example 17 | 0.0606 | 0.2168 | 0.0444 | 0.00700 | 0.0220 | 5.16 | 2.40 | 360 |
| Ref. Example 18 | 0.0611 | 0.2170 | 0.0443 | 0.00696 | 0.0220 | 5.24 | 2.37 | 366 |
| Comparative Example 1 | 0.4400 | 1.2400 | 0.1060 | 0.00500 | 0.0190 | 6.09 | 2.63 | 250 |
| Comparative Example 2 | 0.0530 | 0.1740 | 0.0400 | 0.00730 | 0.0225 | 4.82 | 1.98 | 300 |
| Comparative Example 3 | 0.0520 | 0.1600 | 0.0392 | 0.00770 | 0.0235 | 4.75 | 1.95 | 295 |
| Comparative Example 4 | - | - | - | - | - | 0.50 | 3.00 | 150 |

As shown in Table 1, in Examples satisfying requirements of the present invention, the porous composite film including a porous layer having sufficient adhesive force and porous layer strength is obtained, and the battery using the porous composite film as the separator has excellent cycle characteristics.

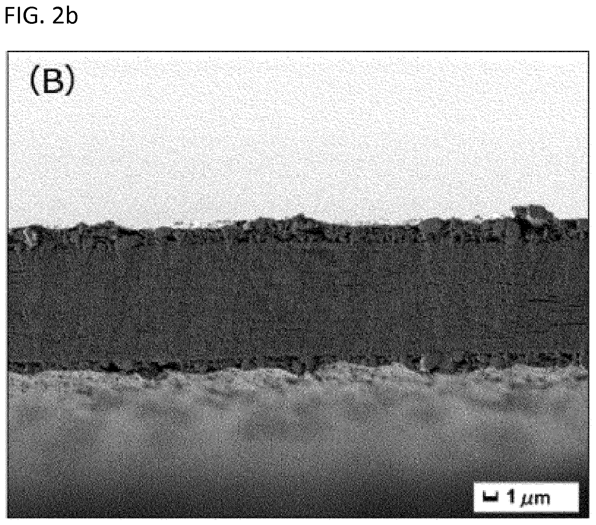

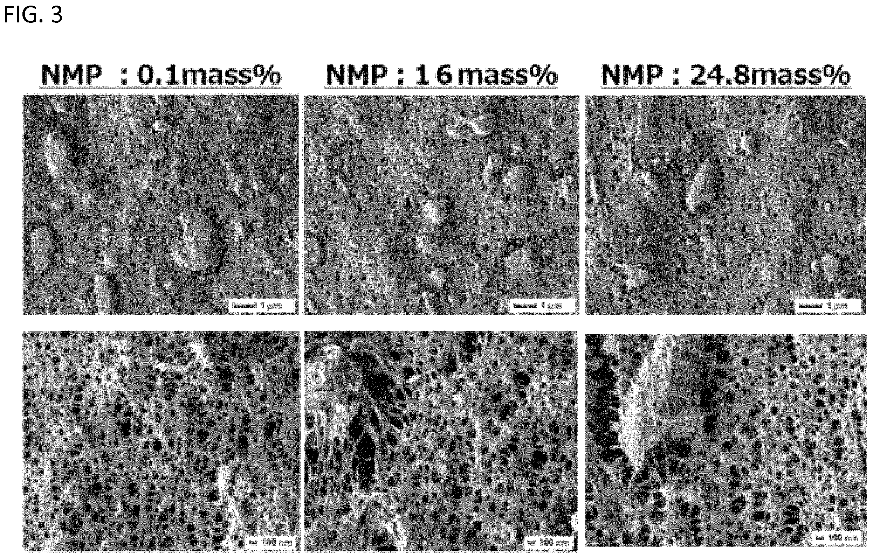

FIG. 2a and FIG. 2b are SEM images of cross sections of the porous composite films in Example 2 and Comparative Example 3, respectively, and FIG. 3 are SEM images of surfaces of porous composite films in Examples 1 and 14 and Comparative Example 3.

The porous composite film in Example 2 (NMP concentration: 0.1% by mass) shown in FIG. 2a is in a state of reflecting that $D_150$ and $D_190$ of the cross-sectional void area distribution and the average area A1 of the cross-sectional void are larger than those of the porous composite film in Comparative Example 3 (NMP concentration: 24.8% by mass) shown in FIG. 2b. That is, the porous layer in Example 2 has a sparse structure, and the porous layer in Comparative Example 3 has a dense structure.

The SEM image on the left side of FIG. 3 shows the surface of the porous layer of the porous composite film in Example 2 (NMP concentration: 0.1 % by mass), the SEM image in the middle of FIG. 3 shows the surface of the porous layer of the porous composite film in Example 14 (NMP concentration: 16.0% by mass), and the SEM image on the right side of FIG. 3 shows the surface of the porous layer of the porous composite film in Comparative Example 3 (NMP concentration: 24.8% by mass), and the lower SEM image is an enlarged image of the upper SEM image. In Examples 1 and 5, $D_250$ and $D_290$ of the surface pore area distribution are small (that is, a relatively dense structure), and the surface pore area distribution is different (a difference in the surface pore area is small although the distribution is different) with respect to the case of Comparative Example 3.

As described above, the pore distribution of the porous layer surface of the porous composite film in Example 2 is relatively dense, an inner region thereof (cross-sectional region) is a sparse structure, and in contrast, the pore distribution of the porous layer surface of the porous composite film in Comparative Example 3 is relatively sparse, and an inner region thereof (cross-sectional region) is a dense structure. It is considered that such a difference in the structure of the porous layer greatly affects differences in the porous layer strength and the cycle characteristics.

Industrial Applicability

The porous composite film in embodiments of the present invention can provide a porous composite film suitable for a separator of a battery having excellent cycle characteristics, the porous composite film including a porous layer capable of preventing partial falloff and adhesion of dropouts in the production process while having excellent adhesive force and porous layer strength, and a battery using the porous composite layer. Further, in the present invention, it is possible to provide a method for producing the porous composite film.

Reference Signs List

1: Unwinding roll

2: Dip head

3: Coagulation/flushing tank

4: Primary flushing tank

5: Secondary flushing tank

6: Tertiary flushing tank

7: Drying furnace

8: Winding roll

**Claims**

1. A porous composite film comprising a porous substrate and a porous layer laminated on at least one surface of the porous substrate, wherein the porous layer contains a fluorine-containing resin and a ceramic, and satisfies the following requirements (i), (ii), (iii) and (iv):

(i) the porous layer contains a polymer containing a vinyliden fluoride unit as the fluorine-containing resin;
(ii) a value of $D_1 50$ of a cross-sectional void area distribution of the porous layer is 0.06 $\mu$m$^2$ or more and 0.38 $\mu$m$^2$ or less, and a value of $D_1 90$ of the cross-sectional void area distribution of the porous layer is 0.20 $\mu$m$^2$ or more and 1.15 $\mu$m$^2$ or less;
(iii) a value of $D_2 50$ of a surface pore area distribution of the porous layer is 0.0060 $\mu$m$^2$ or more and 0.0072 $\mu$m$^2$ or less, and a value of $D_2 90$ of the surface pore area distribution of the porous layer is 0.0195 $\mu$m$^2$ or more and 0.0220 $\mu$m$^2$ or less; and
(iv) porosity of the porous layer is 50% or more and 70% or less, and wherein

$D_1 50$, $D_1 90$, $D_2 50$, $D_2 90$ and the porosity are determined as defined in the description.

2. The porous composite film according to claim 1, wherein the porous layer has an average area A1 of a cross-sectional void of 0.054 $\mu$m$^2$ or more and 0.098 $\mu$m$^2$ or less, and wherein the average area A1 of a cross-sectional void is determined as defined in the description.

3. The porous composite film according to claim 1 or 2, wherein the porous substrate is a polyolefin porous film.

4. A battery separator comprising the porous composite film according to any one of claims 1 to 3.

5. A battery comprising: a positive electrode, a negative electrode, and the battery separator according to claim 4 disposed between the positive electrode and the negative electrode.

6. A method for producing the porous composite film as claimed in any one of claims 1 to 3, the method comprising:

a step of coating at least one surface of a porous substrate with a coating liquid having a viscosity of 600 mPa·s or more and 1000 mPa·s or less, wherein the viscosity is determined as described in the description, and in which a polymer containing a vinyliden fluoride unit as the fluorine-containing resin is dissolved in a good solvent, thereby forming a coating layer;
a step of immersing the porous substrate on which the coating layer has been formed in a coagulating liquid containing water, thereby coagulating the fluorine-containing resin to form a porous layer, and obtaining a composite film in which the porous layer has been formed on the porous substrate;
a step of flushing the composite film; and
a step of drying the composite film after flushing,
wherein a temperature of the coagulating liquid is in a range of 10°C to 25°C, and a concentration of the good solvent in the coagulating liquid is 0.1% by mass or more and less than 20% by mass.

**Patentansprüche**

1. Poröser Verbundfilm, der ein poröses Substrat und eine poröse Schicht, die auf mindestens eine Oberfläche des porösen Substrats laminiert ist, aufweist, wobei die poröse Schicht ein fluorhaltiges Harz und eine Keramik enthält, und die folgenden Anforderungen (i), (ii), (iii) und (iv) erfüllt:

(i) die poröse Schicht enthält als fluorhaltiges Harz ein Polymer, das eine Vinylidenfluorid-Einheit enthält;
(ii) ein Wert von $D_1 50$ einer Querschnitts-Hohlraumverteilung der porösen Schicht beträgt 0,06 $\mu$m$^2$ oder mehr und 0,38 $\mu$m$^2$ oder weniger, und ein Wert von $D_1 90$ der Querschnitts-Hohlraumverteilung der porösen Schicht beträgt 0,20 $\mu$m$^2$ oder mehr und 1,15 $\mu$m$^2$ oder weniger;
(iii) ein Wert von $D_2 50$ einer Oberflächenporenflächenverteilung der porösen Schicht beträgt 0,0060 $\mu$m$^2$ oder mehr und 0,0072 $\mu$m$^2$ oder weniger, und ein Wert von $D_2 90$ der Oberflächenporenflächenverteilung der porösen Schicht beträgt 0,0195 $\mu$m$^2$ oder mehr und 0,0220 $\mu$m$^2$ oder weniger; und
(iv) die Porosität der porösen Schicht beträgt 50% oder mehr und 70% oder weniger, und wobei

$D_1 50$, $D_1 90$, $D_2 50$, $D_2 90$ und die Porosität wie in der Beschreibung definiert bestimmt sind.

2. Poröser Verbundfilm nach Anspruch 1, wobei die poröse Schicht eine durchschnittliche Fläche A1 eines Querschnittshohlraums von 0,054 $\mu$m$^2$ oder mehr und 0,098 $\mu$m$^2$ oder weniger hat, und wobei die durchschnittliche Fläche A1 eines Querschnittshohlraums wie in der Beschreibung definiert bestimmt ist.

**3.** Poröser Verbundfilm nach Anspruch 1 oder 2, wobei das poröse Substrat ein poröser Polyolefinfilm ist.

**4.** Batterieseparator, der die poröse Verbundfolie nach einem der Ansprüche 1 bis 3 aufweist.

**5.** Batterie, die eine positive Elektrode, eine negative Elektrode und den Batterieseparator nach Anspruch 4, der zwischen der positiven Elektrode und der negativen Elektrode angeordnet ist, aufweist.

**6.** Verfahren zur Herstellung des porösen Verbundfilms nach einem der Ansprüche 1 bis 3, wobei das Verfahren umfasst:

einen Schritt des Beschichtens mindestens einer Oberfläche eines porösen Substrats mit einer Beschichtungsflüssigkeit mit einer Viskosität von 600 mPa·s oder mehr und 1000 mPa·s oder weniger, wobei die Viskosität wie in der Beschreibung beschrieben bestimmt wird, und in dem ein Polymer, das eine Vinylidenfluorid-Einheit als fluorhaltiges Harz enthält, in einem guten Lösungsmittel gelöst wird, wodurch eine Beschichtungsschicht gebildet wird;
einen Schritt des Eintauchens des porösen Substrats, auf dem die Beschichtungsschicht gebildet wurde, in eine wasserhaltige Koagulationsflüssigkeit, wodurch das fluorhaltige Harz koaguliert wird, um eine poröse Schicht zu bilden, und ein Verbundfilm erhalten wird, in dem die poröse Schicht auf dem porösen Substrat gebildet wurde;
einen Schritt des Spülens des Verbundfilms; und
einen Schritt des Trocknens des Verbundfilms nach dem Spülen,
wobei eine Temperatur der Koagulationsflüssigkeit in einem Bereich von 10 °C bis 25 °C liegt, und eine Konzentration des guten Lösungsmittels in der Koagulationsflüssigkeit 0,1 Masse-% oder mehr und weniger als 20 Masse-% beträgt.

## Revendications

**1.** Film composite poreux comprenant un substrat poreux et une couche poreuse stratifiée sur au moins une surface du substrat poreux, dans lequel la couche poreuse contient une résine contenant du fluor et une céramique, et satisfait aux exigences (i), (ii), (iii) et (iv) suivantes :

(i) la couche poreuse contient un polymère contenant une unité fluorure de vinylidène comme étant la résine contenant du fluor ;
(ii) une valeur de $D_1 50$ d'une distribution de superficie de vide de section transversale de la couche poreuse est supérieure ou égale à 0,06 $\mu m^2$ et inférieure ou égale à 0,38 $\mu m^2$, et une valeur de $D_1 90$ de la distribution de superficie de vide de section transversale de la couche poreuse est supérieure ou égale à 0,20 $\mu m^2$ et inférieure ou égale à 1,15 $\mu m^2$;
(ii) une valeur de $D_2 50$ d'une distribution de superficie de pore de surface de la couche poreuse est supérieure ou égale à 0,0060 $\mu m^2$ et inférieure ou égale à 0,0072 $\mu m^2$, et une valeur de $D_2 90$ de la distribution de superficie de pore de surface de la couche poreuse est supérieure ou égale à 0,0195 $\mu m^2$ et inférieure ou égale à 0,0220 $\mu m^2$; et
(iv) la porosité de la couche poreuse est supérieure ou égale à 50% et inférieure ou égale à 70%, et où

$D_1 50$, $D_1 90$, $D_2 50$, $D_2 90$ et la porosité sont déterminés comme défini dans la description.

**2.** Film composite poreux selon la revendication 1, dans lequel la couche poreuse a une superficie moyenne A1 d'un vide de section transversale supérieure ou égale à 0,054 $\mu m^2$ et inférieure ou égale à 0,098 $\mu m^2$, et dans lequel la superficie moyenne A1 d'un vide de section transversale est déterminée comme défini dans la description.

**3.** Film composite poreux selon la revendication 1 ou 2, dans lequel le substrat poreux est un film poreux de polyoléfine.

**4.** Séparateur de batterie comprenant le film composite poreux selon l'une quelconque des revendications 1 à 3.

**5.** Batterie comprenant : une électrode positive, une électrode négative, et le séparateur de batterie selon la revendication 4 disposé entre l'électrode positive et l'électrode négative.

**6.** Procédé de fabrication du film composite poreux tel que revendiqué dans l'une quelconque des revendications 1 à 3, le procédé comprenant :

une étape consistant à revêtir au moins une surface d'un substrat poreux d'un liquide de revêtement ayant une viscosité supérieure ou égale à 600 mPa.s et inférieure ou égale à 1000 mPa.s, où la viscosité est déterminée comme décrit dans la description, et dans laquelle un polymère contenant une unité fluorure de vinylidène comme étant la résine contenant du fluor est dissous dans un bon solvant, formant ainsi une couche de revêtement ;

une étape consistant à immerger le substrat poreux sur lequel la couche de revêtement a été formée dans un liquide coagulant contenant de l'eau, faisant coaguler ainsi la résine contenant du fluor pour former une couche poreuse, et obtenant un film composite dans lequel la couche poreuse a été formée sur le substrat poreux :

une étape consistant à rincer le film composite ; et
une étape consistant à sécher le film composite après rinçage,
où une température du liquide coagulant se trouve dans un intervalle de 10°C à 25°C, et une concentration du bon solvant dans le liquide coagulant est supérieure ou égale à 0,1% en masse et inférieure à 20% en masse.

FIG. 1

FIG. 2a

FIG. 2b

FIG. 3

NMP : 0.1mass%   NMP : 16mass%   NMP : 24.8mass%

**EP 3 605 655 B1**

**REFERENCES CITED IN THE DESCRIPTION**

**Patent documents cited in the description**

- JP 5964951 B
- JP 2016038934 A
- JP 2003171495 A
- WO 2014126079 A1
- WO 2017094486 A1
- US 2015372276 A1
- US 2002197413 A1